# EUROPEAN PATENT SPECIFICATION

(11) **EP 3 581 081 B1**
(45) Date of publication and mention of the grant of the patent: **28.07.2021**
(21) Application number: 18382415.0
(22) Date of filing: 12.06.2018
(51) Int. Cl.: A47J 45/07

(54) **COMPRESSION SPRING RETAINER AND METHOD OF USE THEREOF**
DRUCKFEDERHALTER UND VERFAHREN ZU DESSEN VERWENDUNG
DISPOSITIF DE RETENUE DE RESSORT DE COMPRESSION ET SON PROCÉDÉ D'UTILISATION

(43) Date of publication of application: 18.12.2019
(73) Proprietor: A. Raymond et Cie, 38000 Grenoble (FR)
(72) Inventor: PACHO MILLÁN, Sandra, La Llagosta, Barcelona 08120 (ES)
(74) Representative: Tilmann, Max Wilhelm

(56) References cited:
- EP-A1- 2 837 315
- DE-U- 6 811 101
- US-A- 4 032 032
- US-A1- 2005 117 993

## Description

### FIELD OF THE INVENTION

The present disclosure generally relates to a fastener and, more specifically, to compression spring retainer and methods of securing an element to a surface using the same.

### DESCRIPTION OF THE RELATED ART

Fasteners are used in various industries to secure elements to surfaces. For example, a conventional fastener may be used to secure a handle to an item of cookware or hollowware. Such conventional fasteners suffer from myriad drawbacks, such as developing slop/play over time, e.g. due to the loosening of a bolt used in combination with the fastener over time. For instance, many fasteners lack sufficient means to reduce rotational gap during and subsequent to installation, which can introduce difficulties in properly aligning a handle during installation, and lead to slop/play between the handle and the surface. Conventional fasteners also lack effective means to prevent deformation of the surface during installation (e.g. securement) of the handle and, exacerbating the drawbacks above, during tightening the handle in response to the development of slop/play during use of the item. From EP 2 837 315 A1 a cooking utensils is known that comprises a part releasably secured to the at least one handle part, wherein on the part a coupling part is fastened, which is introduced in a receptacle of the handle part.

### SUMMARY OF THE INVENTION

An improved compression spring retainer is provided. The compression spring retainer includes a body that is adapted to be disposed about a nut. The body includes a base portion extending between first and second ends, a first side portion extending upwardly from the base portion between the first and second ends, and a second side portion extending upwardly from the base portion between the first and second ends opposite the first side portion. The compression spring retainer also includes a resilient compression leg, which extends outwardly from the first end of the body and is configured to provide a biasing force in a lengthwise direction of the body. The compression spring retainer further includes a resilient anti-deformation leg, which extends outwardly from the second end of the body and includes a portion that extends below a plane defined by the base portion of the body. The compression spring retainer is adapted for securing an element to a surface. In particular, the resilient compression leg and the resilient anti-deformation leg cooperate during installation (i.e., securement) of the element to the surface with the compression spring retainer and a bolt to create torque during the tightening of the bolt and also to protect the surface from deformation during installation.

A method of securing an element to a surface with the compression spring retainer is also provided. The method includes disposing the compression spring retainer about a nut secured to the surface. The method also includes disposing the compression spring retainer and the nut into an aperture defined by the element, thereby contacting opposing lateral side surfaces and a back surface of the aperture with the compression spring retainer. The method further includes disposing a bolt through an opening defined in the element, wherein the opening passes through the back surface of the aperture and is in alignment with a threaded interior of the nut. Finally, the method includes threadably engaging the bolt with the threaded interior of the nut, thereby securing the element to the surface.

These and other features and advantages of the present disclosure will become apparent from the following description of particular embodiments, when viewed in accordance with the accompanying drawings and appended claims.

### DESCRIPTION OF THE DRAWINGS

Figure 1 is a side perspective view of a compression spring retainer in accordance with a first embodiment;
Figure 2 is a top perspective view of another compression spring retainer in accordance with the first embodiment;
Figure 3 is an environmental side perspective view of a further compression spring retainer in accordance with the first embodiment, shown prior to a handle being disposed thereabout;
Figure 4 is an environmental end view of another compression spring retainer in accordance with the first embodiment, shown disposed within an aperture defined by a handle;
Figure 5 is an environmental side cut-away view of a compression spring retainer in accordance with the first embodiment, shown in an assembled configuration with a handle lacking a ferrule;
Figure 6 is a top perspective view of a compression spring retainer in accordance with a second embodiment;
Figure 7 is another top perspective view of the compression spring retainer shown in Figure 6; and
Figure 8 is a perspective view of another compression spring retainer, shown prior to being disposed about a nut secured to a surface.

### DETAILED DESCRIPTION OF THE INVENTION

A compression spring retainer, and methods of securing an element to a surface with the same, is provided. As described in additional detail below, the compression spring retainer includes structure for increasing tightening torque via spring force during the tightening of a bolt during the securement (i.e., installation) of an element to a surface of a body, structure for reducing rotational gap during such installation of the element, and structure for protecting the body from deformation during securement of the element to the surface thereof. These structures, and thus the compression spring retainer and related methods, provide increased ease of securement of elements to surfaces and decreased potential and magnitude of slop/play between an element and a surface due to a connecting bolt loosening over time.

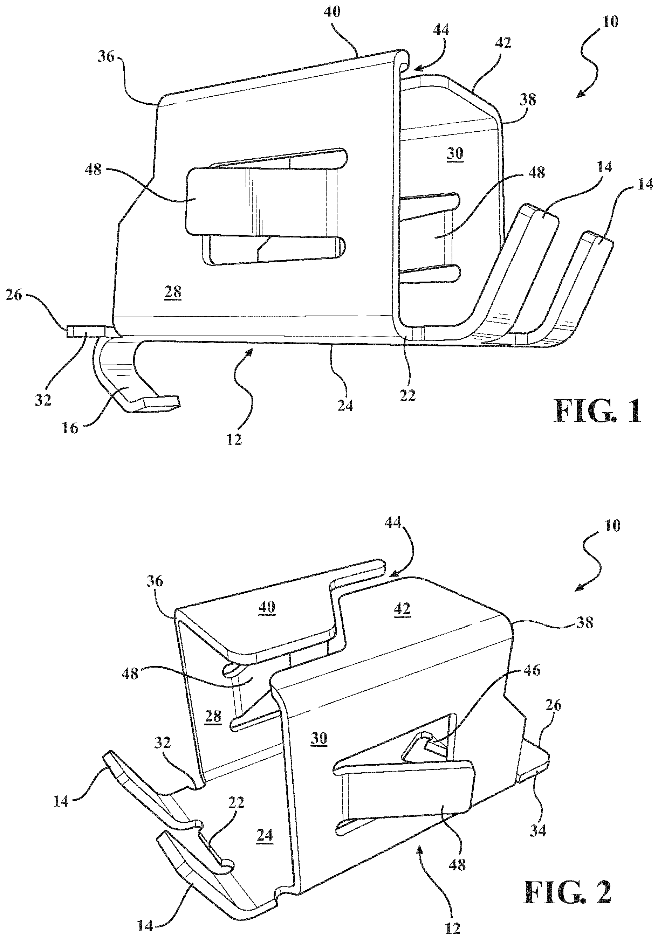

Referring to Figures 1-5, wherein like numerals indicate corresponding parts throughout the several views, a first embodiment of a compression spring retainer is illustrated and generally designated at 10. Certain features of the compression spring retainer 10 are functional, but can be implemented in different aesthetic configurations. The compression spring retainer 10 includes a body 12, a resilient compression leg 14, and a resilient anti-deformation leg 16.

In general, the body 12 is adapted to be disposed about (i.e., at least partially fit over) a nut 18, which is typically secured (or securable) to a surface 20. The shape of the nut 18 is not limited, and can include a variety of cross sectional and/or perimeter shapes, such as square, hexagonal, circular, and polygonal shapes. The nut 18 typically defines an interior adapted (e.g. threaded) to receive a fastener 58 (e.g. a bolt 58), as discussed in further detail below. In some instances, the surface 20 is an exterior (e.g. outward-facing side) of an item of hollowware or cookware, such as a frying pan. However, the surface 20 not limited, and may be a surface not associated with cookware.

The body 12 includes a first end 22, a second end 26, and a base portion 24 extending lengthwise therebetween. The body 12 also includes a first side portion 28 and a second side portion 30. More specifically, the first side portion 28 extends upwardly from the base portion 24 at a first edge 32, which extends between the first end 22 and the second end 26. Similarly, the second side portion 30 extends upwardly from the base portion 24 at a second edge 34, which extends between the first end 22 and the second end 26 opposite the first edge 32. The first and second side portions 28, 30 are independently configured, and may extend orthogonally to a plane generally defined by the base portion 24, or may extend at an acute or obtuse angle thereto. The first side portion 28 includes a first top edge 36, and the second side portion 30 includes a second top edge 38.

The body 12 also includes a first horizontal member 40, which extends inwardly from the first top edge 36 of the first side portion 28 toward the second top edge 38 of the second side portion 30. The body 12 further includes a second horizontal member 42, which extends inwardly from the second top edge 38 of the second side portion 30 toward the first top edge 36 of the first side portion 28. Typically, the first horizontal member 40 and the second horizontal member 42 each independently define a planar surface opposing and generally parallel to (i.e. overlapping with) the base portion 24. The first horizontal member 40 and the second horizontal member 42 may also overlap one another (not shown). Alternatively, the first horizontal member 40 and the second horizontal member 42 may not overlap one another, but instead cooperatively define a gap 44 therebetween. The gap 44 may be any shape, and may extend linearly or non-linearly between the first and second ends 22, 26 (i.e., lengthwise across) of the body 12. For example, the gap 44 may zig-zag along the length of the body 12, may extend along a curvilinear path, or may conform to a line that is parallel to the first top edge 36 and/or the second top edge 38, or angled with respect to one of the first and second top edges 36, 38.

The resilient compression leg 14 is joined to the first end 22 of the body 12. More specifically, the resilient compression leg 14 extends outwardly from the first end 22, and typically includes at least a portion that extends above the plane generally defined by the base portion 24 of the body 12. The resilient compression leg 14 may be joined to and extend outwardly and upwardly from the base portion 24 at the first end 22 of the body 12. The angle at which the resilient compression leg 14 extends upwardly from the base portion 24 is not limited, and includes angles, as measured with respect to the plane generally defined by the base portion 24, falling within the range of from 10 to 80 degrees, such as from 10 to 70, from 20 to 70 degrees, from 20 to 60, from and from 30 to 60 degrees. The resilient compression leg 12 can be integrally joined to the body 12 (e.g. to the base portion 24 thereof). Optionally, the compression spring retainer 10 includes two resilient compression legs 14, i.e., a first resilient compression leg 14 and a second resilient compression leg 14, which are each as generally described with respect to the compression leg 14 above.

The resilient anti-deformation leg 16 is joined to the second end 26 of the body 12. More specifically, the resilient anti-deformation leg 16 extends outwardly from the second end 26, and is configured to be shaped such that at least a portion of the resilient anti-deformation leg 16 extends below the plane generally defined by the base portion 24 of the body 12. The resilient anti-deformation leg 16 may be joined to and extend outwardly and downwardly from the base portion 24 at the second end 26 of the body 12. The resilient anti-deformation leg 16 can be integrally joined to the body 12 (e.g. to the base portion 24 thereof). Generally, the resilient anti-deformation leg 16 when viewed from a side defines a shape having no sharp edges or corners pointing generally away from the body 12 in a direction parallel to an axis of the base portion 24 running from the first end 22 toward the second end 26. Such sharp edges or corners might otherwise contact the surface 20 to which the nut 18 is secured when the compression spring retainer 10 is installed, as described below, which reduces deformation forces applied to the surface 20, e.g. from the compression spring retainer 10. Typically, the resilient anti-deformation leg 16 includes a curved portion that when viewed from a side optionally generally conforms in part to the contour of a half-circle or, further optionally, to the contour of a "U" (i.e., the resilient anti-deformation leg 16 may have a generally or substantially U-shaped side-profile). Optionally, the resilient anti-deformation leg 16 includes a free terminal end that, when the compression spring retainer 10 is in an installed configuration as described below, has an edge that is biased in a direction pointing away from the surface 20 to which the nut 18 is secured. The shape of the free terminal end of the anti-deformation leg 16 when viewed from a side can optionally define a shape generally discontinuous with the shape of a non-terminal portion of the resilient anti-deformation leg 16 viewed from a corresponding side, e.g. such that the free terminal end of the resilient anti-deformation leg 16 may generally bend upward or downward, or have a curved shape not fully conforming to the general shape to which a non-terminal portion of the resilient anti-deformation leg 16 conforms when viewed from a side.

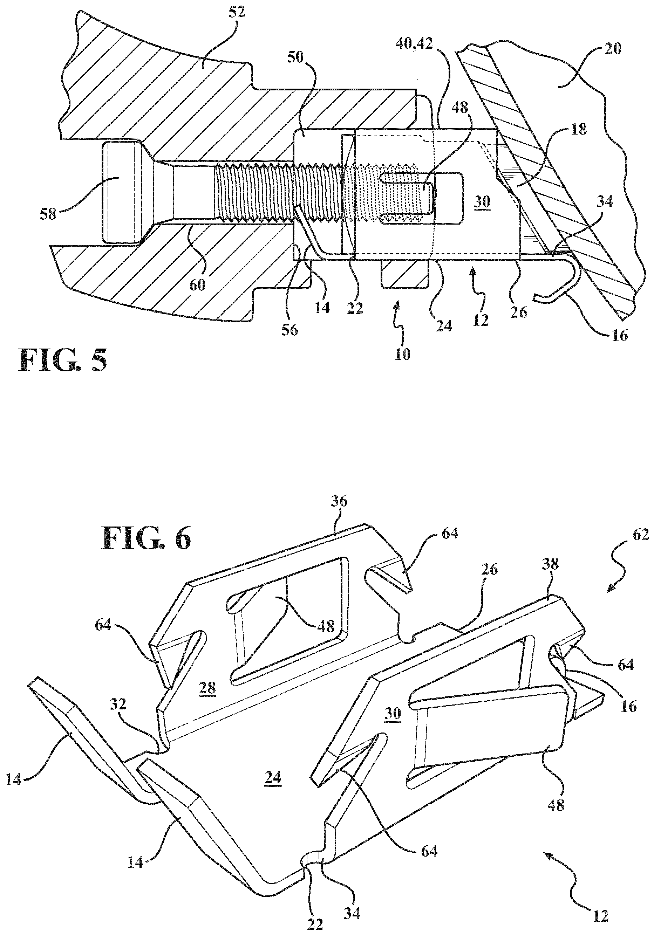

As best shown in Figure 5, the compression spring retainer 10 may include a bur 46 that extends from at least one of the first side portion 28, the second side portion 30, the first horizontal member 40, the second horizontal member 42, and the base portion 24. The bur 46 is a generally pointed projection that extends from a surface of the compression spring retainer 10, e.g. located on the first side portion 28, the second side portion 30, the first horizontal member 40, the second horizontal member 42, or the base portion 24. It is to be understood that the functionality, as described below, of the bur 46 can be alternatively achieved by a protrusion or a plurality of protrusions of various independently selected shapes and configurations, which may each extend from the compression spring retainer 10 as described above.

The compression spring retainer 10 may include a retention member 48. The retention member 48 typically extends outwardly from the first or second side portions 28, 30. In some implementations, the retention member 48 extends outwardly and toward the second end 26 of the body 12. However, the retention member 48 may extend in any direction with respect to the body 12.The retention member 48 is resilient, and adapted to provide outward compressive force, as described in further detail below. The retention member 48 may be integrally joined with the body 12, e.g. at the first or second side portions 28, 30 thereof. Optionally, the compression spring retainer 10 includes two retention members 48, i.e., a first retention member 48 and a second retention member 48, which are each as generally described above with respect to the retention member 48. The compression spring retainer 10 may include additional retention members 48 as well. In such instances where the compression spring retainer 10 includes more than one retention member 48, each retention member 48 typically extends outwardly from a different portion of the body 12, such as from any one of the first side portion 28, the second side portion 30, the first horizontal member 40, and the second horizontal member 42.

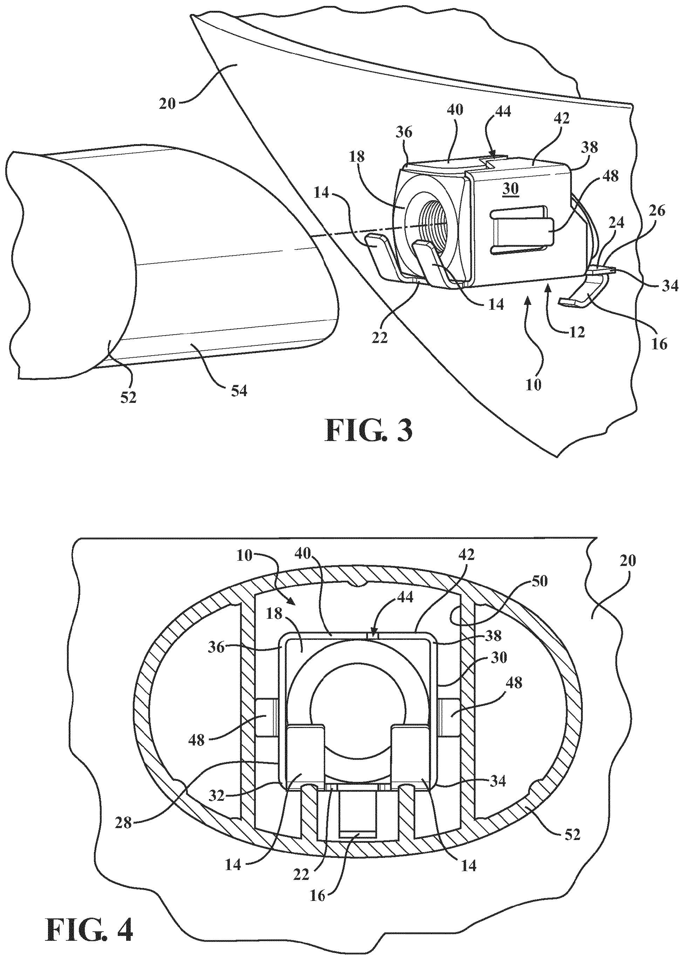

With particular reference to Figures 3-5, the features and elements of the compression spring retainer 10 described herein cooperatively engage various portions of the nut 18 and an element 52 during the securement of the element 52 to the surface 20 on which the nut 18 is secured. Accordingly, the method of securing the element 52 to the surface 20 with the compression spring retainer 10 is described below.

The method includes disposing the compression spring retainer 10 about the nut 18 secured to the surface 20. As described above, the surface 20 is not limited, and may be the surface of any article. In some instances, the surface 20 is a side of an item of cookware, such as a base of a pot or pan (e.g. a frying pan). The compression spring retainer 10 may be disposed about the nut 18 in any fashion. Typically, disposing the compression spring retainer 10 about the nut 18 includes generally placing (e.g. inserting) the nut 18 at least partially within an internal volume delimited by the body 12, and contacting the surface 20 with the resilient anti-deformation leg 16 of the compression spring retainer 10. Disposing the compression spring retainer 10 about the nut 18 typically also includes contacting at least three sides of the nut 18 (or less if the nut 18 is not polygonal in outer shape) with the compression spring retainer 10 (e.g. with the base portion 24, the first and/or second side portions 28, 30, and/or the first and/or second horizontal members 40, 42). The compression spring retainer 10 so disposed about the nut 18 may be referred to as an installed configuration. In certain implementations, the at least one bur 46 will bite into a surface of the nut 18 in the installed configuration, and thereby impose a force resisting removal of the compression spring retainer 10 from the nut 18 (e.g. prevent removing the compression spring retainer 10 from the installed configuration).

As best shown in Figures 4 and 5, the method also includes disposing the compression spring retainer 10 and the nut 18 (i.e., in the installed configuration) into an aperture 50 defined by the element 52. The element 52 may include a decorative element 54 (e.g. ferrule 54, or other such embellishment) corresponding to an end of the element 52 intended to be most proximal to the surface 20 when the element 52 is secured thereto. The decorative element 54can optionally cooperate with the element 52 to establish proper securement of the element 52 to the surface 20, e.g. via cooperation with the compression spring retainer 10. Typically, disposing the compression spring retainer 10 and the nut 18 into the aperture 50 includes contacting opposing lateral side surfaces of the aperture 50 with the compression spring retainer 10. More specifically, the retention members 48 are typically compressed against the opposing lateral side surfaces of the aperture 50, and cooperatively function as a spring imposing a force on the lateral sides, and further biting into the lateral sides, in such a manner as to effectively resist withdrawal of the compression spring retainer 10, and thus the nut 18, from the aperture 50 of the element 52. Disposing the compression spring retainer 10 and the nut 18 into the aperture 50 also typically includes contacting a back surface 56 of the aperture 50 with the resilient compression leg 14 of the compression spring retainer 10. So positioned, an opening 60 defined in the element 52, which extends through the back surface 56 thereof, is aligned with the interior of the nut 18. Accordingly, the method also includes disposing a fastener 58 through the opening 60 and securably engaging the fastener 58 with the nut 18. In specific instances, as described above, the fastener 58 is a bolt 58 (e.g. an M4 screw) and the interior of the nut 18 is threaded, such that securably engaging the fastener 58 is further defined as threadably engaging the bolt 58 with the threaded interior of the nut 18. However, the fastener 58 and nut 18 may not be threadably engageable, but may instead be a push-type (or snap-type) fastener pairing without departing from the scope of this disclosure.

In general, securably engaging the fastener 58 with the nut 18 causes a biasing force to be formed between the resilient anti-deformation leg 16 and the resilient compression leg 14 in a lengthwise direction of the body 12. This biasing force functions to increase torque during and subsequent to engaging the fastener 58 with the nut 18 so as to reduce any tendency of the fastener 58 to loosen from engagement with the nut 18. The biasing force further functions to prevent slop/play between the element 52 and the surface 20. Additionally, securably engaging the fastener 58 with the nut 18 causes the retention member(s) 48 function to reduce the rotational gap between the compression spring retainer 10 and the aperture 50, thereby properly aligning the element 52 during securement thereof to the surface 20. By reducing the rotational gap, the retention member(s) 48 also function to resist rotation or slop/play of the element 52 subsequent to the fastener 58 being securably engaged with the nut 18. The resilient anti-deformation leg 16 functions during to prevent deformation of the surface 20 securement of the element 52 thereto, by cooperating with the resilient compression leg 14 to act as a spring force between the surface 20 and the element 52 and thereby preventing over-tightening of the fastener 58. In other words, the compression spring retainer 10 contacts and imposes forces upon the surface 20 during and subsequent to securement of the element 52 thereto, and the resilient anti-deformation leg 16 functions to ensure that such forces do not cause undesirable deformations of the surface 20.

Referring to Figures 6-8, wherein like numerals indicate corresponding parts throughout the several views, a second embodiment of the compression spring retainer is illustrated and generally designated at 62. Certain features of the compression spring retainer 62 are functional, but can be implemented in different aesthetic configurations. The compression spring retainer 62 is identical to the compression spring retainer 10 according to the first embodiment, with the exception that the compression spring retainer 62 does not include either of the first and second horizontal members 40, 42, but instead includes a barb 64.

More specifically, the compression spring retainer 62 includes the barb 64, which extends inwardly from at least one of the first and second side portions 28, 30. In certain implementations, the compression spring retainer 62 includes multiple barbs 64 extending from both of the first and second side portions 28, 30, as shown in Figures 6-8. Such barbs 64 are independently configured and shaped, and each function to bite into a surface of the nut 18 in the installed configuration, and thereby impose a force resisting removal of the compression spring retainer 62 from the nut 18 (e.g. prevent removing the compression spring retainer 62 from the installed configuration). The compression spring container 62 may include an additional or alternative protrusion, bur, or other alternative element, or a combination thereof, to achieve the same function as that described herein for the barb 64, including variations on the bur 46.

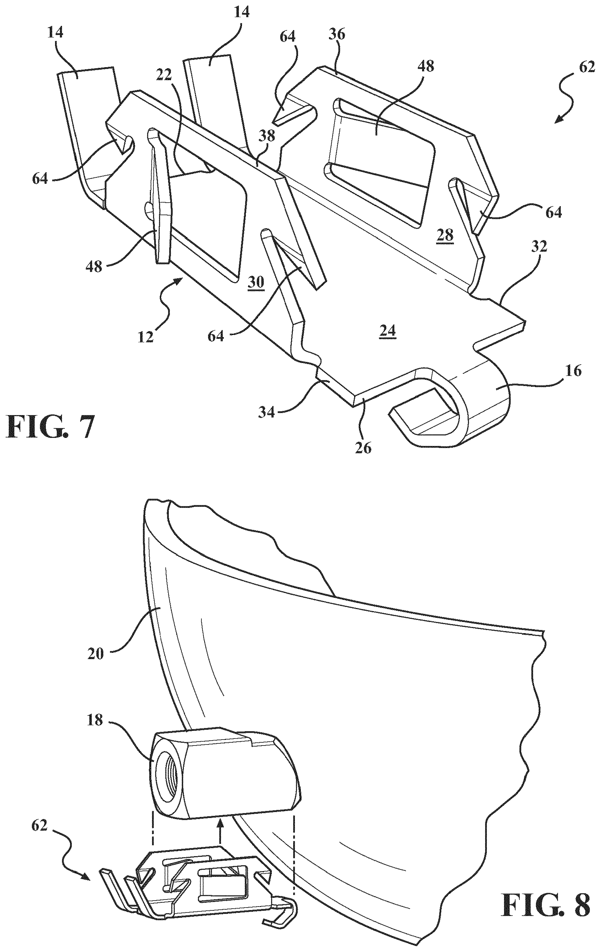

The method of securing the element 52 to the surface 20 described above with regard to the compression spring retainer 10 according to the first embodiment may equally be performed using the compression spring retainer 62 according to the second embodiment. However, as the compression spring retainer 62 does not include the first and second horizontal members 40, 42, the body 12 does not overlie a top surface of the nut 18 subsequent to being positioned thereon (as does the body 12 of the compression spring retainer 10). Therefore, as best shown in Figure 8, disposing the compression spring retainer 62 about the nut 18 typically includes pressing the compression spring retainer 62 laterally about the nut 18 (e.g. from a side position thereto). For example, disposing the compression spring retainer 62 about the nut 18 may include moving the compression spring retainer 62 in an upward direction 66 from beneath the nut 18 to place the nut 18 at least partially within the internal volume delimited by the body 12 (e.g. between the first horizontal member 40, the second horizontal member 42, and the base portion 24), while contacting the surface 20 with the resilient anti-deformation leg 16. In this fashion, disposing the compression spring retainer 62 about the nut 18 also includes contacting a surface of the nut 18 with the barb(s) 64, which as described above, serves to prevent subsequent removal of the compression spring retainer 62 from the nut 18.

The various elements of the components of the embodiments of the compression spring retainer 10, 62 described above, e.g. the body 12, the resilient compression leg 14, the retention member 48, the resilient anti-deformation leg 16, the bur 46, and the barb 64, may be manufactured of the same or different material(s), such as any one or more of the materials described below. Typically, the compression spring retainer 10, 62 is monolithic in construction and homogeneous in composition. However, the compression spring retainer 10, 62 may comprise multiple components joined together. Moreover, each component may itself comprise a combination of different materials, and thus may not comprise a homogeneous composition throughout. In general, materials suitable for use in or as the compression spring retainer 10, 62, or a component thereof (e.g. the body 12, the resilient compression leg 14, the retention member 48, the resilient anti-deformation leg 16, the bur 46, and/or the barb 64), include metals (e.g. steels, aluminums, alloys, etc.), resins (e.g. thermoset and/or thermoplastic resins), and combinations thereof. However, myriad materials may be used to manufacture the elements of the compression spring retainer 10, 62, each typically selected as a function of availability, cost, performance/end use applications, etc. Moreover, metals, metal alloys, resins are not exhaustive of suitable materials that may be used.

In some embodiments, the compression spring retainer 10, 62 comprises a resin. Examples of suitable resins typically comprise the reaction product of a monomer and a curing agent, although resins formed of self-polymerizing monomers (i.e., those acting as both a monomer and a curing agent) may also be utilized. It is to be appreciated that such resins are conventionally named/identified according to a particular functional group present in the reaction product. For example, the term "polyurethane resin" represents a polymeric compound comprising a reaction product of an isocyanate (i.e., a monomer) and a polyol (i.e., a chain extender/ curing agent). The reaction of the isocyanate and the polyol create urethane functional groups, which were not present in either of the unreacted monomer or curing agent. However, it is also to be appreciated that, in certain instances, resins are named according to a particular functional group present in the monomer (i.e., a cure site). For example, the term "epoxy resin" represents a polymeric compound comprising a cross-linked reaction product of a monomer having one or more epoxide groups (i.e., an epoxide) and a curing agent. However, once cured, the epoxy resin is no longer an epoxy, or no longer includes epoxide groups, but for any unreacted or residual epoxide groups (i.e., cure sites), which may remain after curing, as understood in the art. In other instances, however, resins may be named according to a functional group present in both the monomer and the reaction product (i.e., an unreacted functional group).

In some embodiments, the resin is selected from thermoset resins and thermoplastic resins. Examples of suitable thermoset and/or thermoplastic resins typically include polyamides (PA), such as Nylons; polyesters such as polyethylene terephthalates (PET), polybutylene terephthalates (PET), polytrimethylene terephthalates (PTT), polyethylene naphthalates (PEN), liquid crystalline polyesters, and the like; polyolefins such as polyethylenes (PE), polypropylenes (PP), polybutylenes, and the like; styrenic resins; polyoxymethylenes (POM); polycarbonates (PC); polymethylenemethacrylates (PMMA); polyvinyl chlorides (PVC); polyphenylene sulfides (PPS); polyphenylene ethers (PPE); polyimides (PI); polyamideimides (PAI); polyetherimides (PEI); polysulfones (PSU); polyethersulfones; polyketones (PK); polyetherketones (PEK); polyetheretherketones (PEEK); polyetherketoneketones (PEKK); polyarylates (PAR); polyethernitriles (PEN); resol-type; urea (e.g. melamine-type); phenoxy resins; fluorinated resins, such as polytetrafluoroethylenes; thermoplastic elastomers, such as polystyrene types, polyolefin types, polyurethane types, polyester types, polyamide types, polybutadiene types, polyisoprene types, fluoro types, and the like; and copolymers, modifications, and combinations thereof.

The above description relates to general and specific embodiments of the disclosure. As such, this disclosure is presented for illustrative purposes and should not be interpreted as an exhaustive description of all embodiments of the disclosure or to limit the scope of the claims to the specific elements illustrated or described in connection with these embodiments. Any reference to elements in the singular, for example, using the articles "a," "an," "the," or "said," is not to be construed as limiting the element to the singular. Further, terms such as "orthogonal", "horizontal," and "vertical" are not to be interpreted in an absolute sense subject to the rigorous demands of geometric precision but, rather, as general indicators of a configurational arrangement between two or more elements. For example, the word "orthogonal" as used herein is not exclusive of the possibility wherein two surfaces being "orthogonal" to one another form an angle having a value other than 90 degrees at a point of intersection. The term "resilient" as used herein is readily understood in the art, and is to be interpreted accordingly. In particular, the term resilient is used herein to refer to an ability to recoil or spring back to an original position in response to an applied force. However, when limited by an intervening element (e.g. the aperture 50, the surface 20, etc.), the resilient elements of the compression spring retainer 10, 62 may not be able to spring back into the original position, but are instead intended to act against the intervening element by applying force thereto, as will be understood by those of skill in the art.

Likewise, it is also to be understood that the appended claims are not limited to express and particular compounds, compositions, or methods described in the detailed description, which may vary between particular embodiments that fall within the scope of the appended claims. With respect to any Markush groups relied upon herein for describing particular features or aspects of various embodiments, different, special, and/or unexpected results may be obtained from each member of the respective Markush group independent from all other Markush members. Each member of a Markush group may be relied upon individually and or in combination and provides adequate support for specific embodiments within the scope of the appended claims.

## Claims

1. A compression spring retainer (10) comprising:
a body (12) adapted to be disposed about a nut (18) and including a base portion (24) extending between a first end (22) and a second end (26) of the body (12), a first side portion (28) extending upwardly from the base portion (24) between the first end (22) and second end (26), and a second side portion (30) extending upwardly from the base portion (24) between the first end (22) and second end (26) opposite the first side portion (28);
a resilient compression leg (14) extending outwardly from the first end (22) of the body (12), the resilient compression leg (14) being configured to provide a biasing force in a lengthwise direction of the body (12); and
a resilient anti-deformation leg (16) extending outwardly from the second end (26) of the body (12), where at least a portion of the resilient anti-deformation leg (16) extends below a plane defined by the base portion (24) of the body (12).

2. The compression spring retainer of claim 1, wherein the resilient compression leg (16) is further defined as a first resilient compression leg, and the compression spring retainer further comprises a second resilient compression leg joined to the first end (22) of the body (12).

3. The compression spring retainer of claim 2, wherein the first and second resilient compression legs extend upwardly from the base portion (24) of the body (12).

4. The compression spring retainer of any one of claims 1-3, wherein the resilient anti-deformation leg (16) includes a curved portion.

5. The compression spring retainer of any one of claims 1-4, wherein the first side portion (28) and the second side portion (30) are orthogonal to the base portion (24).

6. The compression spring retainer of any one of claims 1-5, further comprising a barb (64) extending from at least one of the first side portion (28) and the second side portion (30).

7. The compression spring retainer of any one of claims 1-6, further comprising:
a first horizontal member (40) extending inwardly from a top edge (36) of the first side portion (28); and
a second horizontal member (42) extending inwardly from a top edge (38) of the second side portion (30) toward the first horizontal member (40);
wherein each of the first (40) and second horizontal members (42) defines a planar surface opposing and generally parallel to the base portion (24).

8. The compression spring retainer of claim 7, wherein the first and second horizontal members (40, 42) do not overlap one another.

9. The compression spring retainer of claim 7 or 8, wherein the first horizontal member (40) and the second horizontal member (42) cooperatively define a non-linear gap (44) therebetween.

10. The compression spring retainer of any one of claims 7-9, further comprising a burr (46) extending from at least one of the first side portion (28), the second side portion (30), the first horizontal member (40), the second horizontal member (42), and the base portion (24).

11. The compression spring retainer of any one of claims 1-10, further comprising a first retention member (48) extending outwardly from the first side portion (28) of the body (12) and a second retention member (48) extending outwardly from the second side portion (28) of the body (12).

12. The compression spring retainer of any one of claims 1-11, wherein the resilient compression leg (14) and the resilient anti-deformation leg (16) are each integrally joined to the body (12).

13. A method of securing an element to a surface, comprising:
disposing a compression spring retainer (10) about a nut (18) secured to the surface (20), thereby contacting at least three sides of the nut (18) with the compression spring retainer (10);
disposing the compression spring retainer (10) and the nut (18) into an aperture (50) defined by the element (52), thereby contacting opposing lateral side surfaces and a back surface of the aperture (50) with the compression spring retainer (10);
disposing a bolt (58) through an opening (60) defined in the element (52), wherein the opening (60) passes through the back surface of the aperture (50) and is in alignment with a threaded interior of the nut (18); and
threadably engaging the bolt (58) with the threaded interior of the nut (18), thereby securing the element (52) to the surface (20);
wherein the compression spring retainer (10) is the compression spring retainer of any one of claims 1-12.

14. The method of claim 13, wherein disposing the compression spring retainer (10) about the nut (18) further includes contacting the surface (20) with the resilient anti-deformation leg (16) of the compression spring retainer (10), and wherein disposing the compression spring retainer and the nut (18) into the aperture (50) further includes contacting the back surface of the aperture (50) with the resilient compression leg (14) of the compression spring retainer (10).

15. The method of claim 13 or 14, wherein the element is a handle and the surface is a side of an item of cookware.

## Patentansprüche

1. Druckfederhalter (10), umfassend:
einen Körper (12), der dazu angepasst ist, um eine Mutter (18) angeordnet zu werden, und einen Basisabschnitt (24) umfasst, der sich zwischen einem ersten Ende (22) und einem zweiten Ende (26) des Körpers (12) erstreckt, einen ersten Seitenabschnitt (28), der sich vom Basisabschnitt (24) zwischen dem ersten Ende (22) und dem zweiten Ende (26) nach oben erstreckt, und einen zweiten Seitenabschnitt (30), der sich vom Basisabschnitt (24) zwischen dem ersten Ende (22) und dem zweiten Ende (26) nach oben gegenüber dem ersten Seitenabschnitt (28) erstreckt;
einen elastischen Druckschenkel (14), der sich vom ersten Ende (22) des Körpers (12) nach außen erstreckt, wobei der elastische Druckschenkel (14) konfiguriert ist, um eine Vorspannkraft in einer Längsrichtung des Körpers (12) bereitzustellen; und
einen elastischen Antideformationsschenkel (16), der sich vom zweiten Ende (26) des Körpers (12) nach außen erstreckt, wobei sich mindestens ein Abschnitt des elastischen Antideformationsschenkels (16) unterhalb einer durch den Basisabschnitt (24) des Körpers (12) definierten Ebene erstreckt.

2. Druckfederhalter nach Anspruch 1, wobei der elastische Druckschenkel (16) ferner als ein erster elastischer Druckschenkel definiert ist und der Druckfederhalter ferner einen zweiten elastischen Druckschenkel umfasst, der mit dem ersten Ende (22) des Körpers (12) verbunden ist.

3. Druckfederhalter nach Anspruch 2, wobei sich der erste und der zweite elastische Druckschenkel vom Basisabschnitt (24) des Körpers (12) nach oben erstrecken.

4. Druckfederhalter nach einem der Ansprüche 1 bis 3, wobei der elastische Antideformationsschenkel (16) einen gekrümmten Abschnitt umfasst.

5. Druckfederhalter nach einem der Ansprüche 1 bis 4, wobei der erste Seitenabschnitt (28) und der zweite Seitenabschnitt (30) orthogonal zum Basisabschnitt (24) sind.

6. Druckfederhalter nach einem der Ansprüche 1 bis 5, ferner umfassend einen Widerhaken (64), der sich von mindestens einem von dem ersten Seitenabschnitt (28) und dem zweiten Seitenabschnitt (30) erstreckt.

7. Druckfederhalter nach einem der Ansprüche 1 bis 6, ferner umfassend:
ein erstes horizontales Element (40), das sich von einer Oberkante (36) des ersten Seitenabschnitts (28) nach innen erstreckt; und
ein zweites horizontales Element (42), das sich von einer Oberkante (38) des zweiten Seitenabschnitts (30) nach innen in Richtung des ersten horizontalen Elements (40) erstreckt;
wobei jedes von dem ersten (40) und dem zweiten horizontalen Element (42) eine ebene Oberfläche definiert, die dem Basisabschnitt (24) gegenüberliegt und im Allgemeinen parallel zu diesem ist.

8. Druckfederhalter nach Anspruch 7, wobei sich das erste und das zweite horizontale Element (40, 42) nicht gegenseitig überlappen.

9. Druckfederhalter nach Anspruch 7 oder 8, wobei das erste horizontale Element (40) und das zweite horizontale Element (42) zusammen einen nichtlinearen Spalt (44) dazwischen definieren.

10. Druckfederhalter nach einem der Ansprüche 7 bis 9, ferner umfassend einen Grat (46), der sich von mindestens einem von dem ersten Seitenabschnitt (28), dem zweiten Seitenabschnitt (30), dem ersten horizontalen Element (40), dem zweiten horizontalen Element (42) und dem Basisabschnitt (24) erstreckt.

11. Druckfederhalter nach einem der Ansprüche 1 bis 10, ferner umfassend ein erstes Halteelement (48), das sich von dem ersten Seitenabschnitt (28) des Körpers (12) nach außen erstreckt, und ein zweites Halteelement (48), das sich von dem zweiten Seitenabschnitt (28) des Körpers (12) nach außen erstreckt.

12. Druckfederhalter nach einem der Ansprüche 1 bis 11, wobei der elastische Druckschenkel (14) und der elastische Antideformationsschenkel (16) jeweils einstückig mit dem Körper (12) verbunden sind.

13. Verfahren zum Befestigen eines Elements an einer Oberfläche, umfassend:
Anordnen eines Druckfederhalters (10) um eine an der Oberfläche (20) befestigte Mutter (18), wodurch mindestens drei Seiten der Mutter (18) mit dem Druckfederhalter (10) in Kontakt gebracht werden;
Anordnen des Druckfederhalters (10) und der Mutter (18) in einem durch das Element (52) definierten Loch (50), wodurch gegenüberliegende seitliche Seitenflächen und eine Rückseite des Lochs (50) mit dem Druckfederhalter (10) in Kontakt gebracht werden;
Anordnen eines Bolzens (58) durch eine in dem Element (52) definierte Öffnung (60), wobei die Öffnung (60) durch die Rückseite des Lochs (50) verläuft und an einem mit Gewinde versehenen Inneren der Mutter (18) ausgerichtet ist; und
schraubmäßiges Eingreifen des Bolzens (58) mit dem mit Gewinde versehenen Inneren der Mutter (18), wodurch das Element (52) an der Oberfläche (20) befestigt wird;
wobei der Druckfederhalter (10) der Druckfederhalter nach einem der Ansprüche 1 bis 12 ist.

14. Verfahren nach Anspruch 13, wobei das Anordnen des Druckfederhalters (10) um die Mutter (18) ferner das Inkontaktbringen der Oberfläche (20) mit dem elastischen Antideformationsschenkel (16) des Druckfederhalters (10) umfasst, und wobei das Anordnen des Druckfederhalters und der Mutter (18) in dem Loch (50) ferner das Inkontaktbringen der Rückseite des Lochs (50) mit dem elastischen Druckschenkel (14) des Druckfederhalters (10) umfasst.

15. Verfahren nach Anspruch 13 oder 14, wobei das Element ein Griff ist und die Oberfläche eine Seite eines Kochgeschirrgegenstands ist.

## Revendications

1. Dispositif de retenue de ressort de compression (10) comprenant :
un corps (12) adapté pour être disposé autour d'un écrou (18) et comprenant une partie base (24) s'étendant entre une première extrémité (22) et une seconde extrémité (26) du corps (12), une première partie latérale (28) s'étendant vers le haut à partir de la partie base (24) entre la première extrémité (22) et la seconde extrémité (26), et une seconde partie latérale (30) s'étendant vers le haut à partir de la partie base (24) entre la première extrémité (22) et la seconde extrémité (26) opposée à la première partie latérale (28) ;
une patte de compression élastique (14) s'étendant vers l'extérieur à partir de la première extrémité (22) du corps (12), la patte de compression élastique (14) étant conçue pour fournir une force de sollicitation dans une direction longitudinale du corps (12) ; et
une patte élastique anti-déformation (16) s'étendant vers l'extérieur à partir de la seconde extrémité (26) du corps (12), où au moins une partie de la patte élastique anti-déformation (16) s'étend au-dessous d'un plan défini par la partie base (24) du corps (12).

2. Dispositif de retenue de ressort de compression selon la revendication 1, ladite patte de compression élastique (16) étant en outre définie en tant que première patte de compression élastique, et ledit dispositif de retenue de ressort de compression comprenant en outre une seconde patte de compression élastique jointe à la première extrémité (22) du corps (12).

3. Dispositif de retenue de ressort de compression selon la revendication 2, lesdites première et seconde pattes de compression élastiques s'étendant vers le haut à partir de la partie base (24) du corps (12).

4. Dispositif de retenue de ressort de compression selon l'une quelconque des revendications 1 à 3, ladite patte élastique anti-déformation (16) comprenant une partie incurvée.

5. Dispositif de retenue de ressort de compression selon l'une quelconque des revendications 1 à 4, ladite première partie latérale (28) et ladite seconde partie latérale (30) étant orthogonales à la partie base (24).

6. Dispositif de retenue de ressort de compression selon l'une quelconque des revendications 1 à 5, comprenant en outre une barbelure (64) s'étendant à partir d'au moins l'une de la première partie latérale (28) et de la seconde partie latérale (30).

7. Dispositif de retenue de ressort de compression selon l'une quelconque des revendications 1 à 6, comprenant en outre :
un premier élément horizontal (40) s'étendant vers l'intérieur à partir d'un bord supérieur (36) de la première partie latérale (28) ; et
un second élément horizontal (42) s'étendant vers l'intérieur à partir d'un bord supérieur (38) de la second partie latérale (30) vers le premier élément horizontal (40) ;
chacun des premier (40) et second éléments horizontaux (42) définissant une surface plane opposée et généralement parallèle à la partie base (24).

8. Dispositif de retenue de ressort de compression selon la revendication 7, lesdits premier et second éléments horizontaux (40, 42) ne se chevauchant pas.

9. Dispositif de retenue de ressort de compression selon la revendication 7 ou 8, ledit premier élément horizontal (40) et ledit second élément horizontal (42) définissent en coopération un espace non linéaire (44) entre eux.

10. Dispositif de retenue de ressort de compression selon l'une quelconque des revendications 7 à 9, comprenant en outre une bavure (46) s'étendant depuis au moins l'une de la première partie latérale (28), de la seconde partie latérale (30), du premier élément horizontal (40), du second élément horizontal (42) et de la partie base (24).

11. Dispositif de retenue de ressort de compression selon l'une quelconque des revendications 1 à 10, comprenant en outre un premier élément de retenue (48) s'étendant vers l'extérieur à partir de la première partie latérale (28) du corps (12) et un second élément de retenue (48) s'étendant vers l'extérieur à partir de la seconde partie latérale (28) du corps (12).

12. Dispositif de retenue de ressort de compression selon l'une quelconque des revendications 1 à 11, ladite patte de compression élastique (14) et ladite patte élastique anti-déformation (16) étant chacune jointes de manière solidaire au corps (12).

13. Procédé de fixation d'un élément à une surface, comprenant :
la disposition d'un dispositif de retenue de ressort de compression (10) autour d'un écrou (18) fixé à la surface (20), mettant ainsi en contact au moins trois côtés de l'écrou (18) avec le dispositif de retenue de ressort de compression (10) ;
la disposition du dispositif de retenue de ressort de compression (10) et de l'écrou (18) dans une ouverture (50) définie par l'élément (52), mettant ainsi en contact des surfaces de côté latérales opposées et une surface arrière de l'ouverture (50) avec le dispositif de retenue de ressort de compression (10) ;
la disposition d'un boulon (58) à travers une ouverture (60) définie dans l'élément (52), ladite ouverture (60) passant à travers la surface arrière de l'ouverture (50) et étant en alignement avec un intérieur fileté de l'écrou (18) ; et
la mise en prise par filetage du boulon (58) avec l'intérieur fileté de l'écrou (18), fixant ainsi l'élément (52) à la surface (20) ;
ledit dispositif de retenue de ressort de compression (10) étant le dispositif de retenue de ressort de compression selon l'une quelconque des revendications 1 à 12.

14. Procédé selon la revendication 13, ladite disposition du dispositif de retenue de ressort de compression (10) autour de l'écrou (18) comprenant en outre la mise en contact de la surface (20) avec la patte élastique anti-déformation (16) du dispositif de retenue de ressort de compression (10), et ladite disposition du dispositif de retenue de ressort de compression et de l'écrou (18) dans l'ouverture (50) comprenant en outre la mise en contact de la surface arrière de l'ouverture (50) avec la patte de compression élastique (14) du dispositif de retenue de ressort de compression (10).

15. Procédé selon la revendication 13 ou 14, ledit élément étant une poignée et ladite surface étant un côté d'un article de batterie de cuisine.
